# Europäisches Patentamt

## European Patent Office

## Office européen des brevets

(19)

(11) Veröffentlichungsnummer: **0 073 300**
**B1**

(12) EUROPÄISCHE PATENTSCHRIFT

(45) Veröffentlichungstag der Patentschrift: **25.05.88**

(51) Int. Cl.⁴: **G 02 B 6/34**

(21) Anmeldenummer: **82104692.7**

(22) Anmeldetag: **28.05.82**

(54) **Vorrichtung zum getrennten Auskoppeln von optischen Signalen verschiedener Wellenlängen.**

(30) Priorität: **27.08.81 DE 8125009 u**

(43) Veröffentlichungstag der Anmeldung:
**09.03.83 Patentblatt 83/10**

(45) Bekanntmachung des Hinweises auf die
Patenterteilung:
**25.05.88 Patentblatt 88/21**

(84) Benannte Vertragsstaaten:
**AT CH DE LI NL**

(56) Entgegenhaltungen:
DE-A-2 831 935
US-A-4 153 330

PATENTS ABSTRACTS OF JAPAN, Band 4, Nr.
146 (P-31)628r, 15. Oktober 1980, Seite 118 P
31; & JP - A - 55 95 907 (NIPPON DENSHIN
DENWA KOSHA) 21.07.1980

PATENTS ABSTRACTS OF JAPAN, Band 4, Nr.
156 (P-34)638r, 31. Oktober 1980, Seite 98 P 34;
& JP - A - 55 105 211 (MATSUSHITA DENKI
SANGYO K.K.) 12.08.1980

PATENTS ABSTRACTS OF JAPAN, Band 4, Nr.
107 (P-21)589r, 31. Juli 1980, Seite 134 P 21; &
JP - A - 55 65 905 (NIPPON DENSHIN DENWA
KOSHA) 17.05.1980

(73) Patentinhaber: **Philips Kommunikations
Industrie AG
Thurn-und-Taxis-Strasse 10
D-8500 Nürnberg 10 (DE)**

(72) Erfinder: **Oppenländer, Theo
Mülheimer-Ring 10
D-5000 Köln 80 (DE)**
Erfinder: **Finke, Hans-Gerd
Veilchenweg 1
D-5620 Velbert 1 (DE)**
Erfinder: **Tholen, Ton
Benoitstrasse 98
Eindhoven (NL)**
Erfinder: **Potters, C. J Th.
Verkakkerstrasse 25
Veldhoven (NL)**
Erfinder: **Rittich, Dieter
Schubertstrasse 4
D-5060 Bergisch-Gladbach (DE)**

(74) Vertreter: **Koch, Ingo, Dr.-Ing. et al
Philips Patentverwaltung GmbH Wendenstrasse
35 Postfach 10 51 49
D-2000 Hamburg 1 (DE)**

Courier Press, Leamington Spa, England.

## Beschreibung

Die Erfindung betrifft eine Vorrichtung zum Auskoppeln von optischen Signalen verschiedener Wellenlängen aus einem Lichtwellenleiter in mehrere getrennte Lichtwellenleiter mit einem reflektierenden Beugungsgitter, welches gegen die optische Achse des Strahlenganges geneigt ist, und mit einer zwischen den Enden der Lichtwellenleiter und dem Beugungsgitter angeordneten Linse, wobei die Endflächen der die Einzelsignale aufnehmenden Lichtwellenleiter nahezu unmittelbar aneinandergrenzend in einer Reihe angeordnet und fixiert sind.

Derartige bekannte Vorrichtung können als Demultiplexer für die Signalübertragung in Anlagen verwendet werden, in denen verschiedene Signale mit verschiedenen Lichtwellenlängen über einen gemeinsamen Lichtwellenleiter übertragen werden. Dabei wird im Falle der nach der US—A—4153330 bekannten Vorrichtung eine geodätische oder Indexgradienten-Linse und im Falle der nach "Patent abstract of Japan, Band 4, Nr. 146, Seiten 118, P. 31, "Photo branching filter" bekannten Anordnung eine Bikonvex-Linse verwendet.

Bekannt ist auch eine Vorrichtung zum Einkoppeln eines ersten optischen Signals mit einer ersten Wellenlänge in eine Übertragungsglasfaser und zum Auskoppeln eines in der Übertragungsglasfaser in entgegengesetzter Richtung zum ersten optischen Signal verlaufenden zweiten optischen Signals mit mindestens einer zur ersten Wellenlänge verschiedener zweiten Wellenlänge, wobei die einzukoppelnden und ausgekoppelten optischen Signale in räumlich von einander getrennten weiteren Glasfasern verlaufen, bestehend aus einer zwischen der Übertragungsglasfaser und den weiteren Glasfasern angeordneten Abbildungsanordnung, in deren Pupille ein binäres, optisches Gitter liegt, und wobei weitere Glasfasern die in die Beugungsordnungen des Gitters abgebeugten zweiten optischen Signale aufnehmen, bei der das Gitter als Phasengitter ausgebildet und auf einer optischen Achse gemeinsam mit der Abbildungsordnung angeordnet ist, bei der das Phasengitter wenigstens annähernd ein Tastverhältnis von 1:1 und einen optischen Weglängenunterschied von wenigstens annähernd

$$H=(N-1)\times h=n_1\times\lambda l$$

mit $n_1=1, 2, 3,...$ besitzt, wobei N der Brechnungsindex des Phasengittermaterials, h die Gitterhöhe und $\lambda l$ die Wellenlänge des in die Übertragungsglasfaser einzukoppelnden optischen Signals ist, und bei der das Phasengitter zusätzlich die Bedingung

$$(N-1)\times h=(m_1+1/2)\lambda k$$

mit $m_1=0, 1, 2,...$ und $K=II, III,...$ wenigstens annähernd erfüllt (DE—OS 29 16 234). In einer Ausgestaltung dieses Standes der Technik befindet sich das Phasengitter zwischen zwei der optischen Achse angeordneten Linse.

Eine Vorrichtung nach diesem Stand der Technik kann in bestimmten, in der zitierten Schrift beschrieben Fällen als Demultiplexer vorteilhaft verwendet werden. Nachteilig ist aber die relativ hohe Dämpfung, die Lichtstrahlen beim Durchgang durch zwei Linsen und das Phasengitter erleiden. Ein weiterer Nachteil besteht in der relativ aufwendigen Herstellung eines solchen Phasengitters.

Bekannt ist auch ein Verfahren zur Verbindung wenigstens zweier optischer Bauelemente auf einer gemeinsamen optischen Achse, wobei wenigstens eines der optischen Bauelemente eine aus Kern- und Mantelbereich bestehende Lichtleitfaser ist, und wenigstens ein anderes optisches Bauelement ein Koppelelement vorzugsweise eine Linse ist, bei dem das Lichtleitfaserende mit einer Ätzlösung behandelt wird, derart daß sich im Bereich des Faserkerns eine Vertiefung ausbildet, und bei dem das Koppelelement wenigstens zum Teil in die Vertiefung eingeführt wird (DE—A 28 31 935). In einer Ausgestaltung dieses Standes der Technik wird als ein Koppelelement eine Kugellinse verwendet.

In dieser zitierten Schrift werden Anwendungen der Kugellinse zum Koppeln zweier optischer Bauelemente beschrieben. Ein Hinweis auf die Kopplung mehrerer optischer Bauelemente miteinander ist dieser Schrift nicht zu entnehmen.

Der Erfindung liegt die Aufgabe zugrunde, einen Demultiplexer der eingangs beschriebenen Art unter Verwendung bekannter und preisgünstig herstellbarer Bauteile zu schaffen, der möglichst geringe Dämpfungswerte für die Lichtsignale aufweist und eine vielfache Ausnutzung von Lichtwellenleitern gestattet sowie einfach und kompakt aufgebaut ist.

Diese Aufgabe wird erfindungsgemäß dadurch gelöst, daß die Linse eine Kugellinse ist und daß die Endfläche des die Signale zuführenden Lichtwellenleiters unmittelbar neben der Reihe der Endflächen der anderen Lichtwellenleiter angeordnet ist.

Die mit der Erfindung erzielbaren Vorteile bestehen insbesondere darin, daß ein preisgünstig und einfach herstellbarer Demultiplexer geschaffen wurde, dessen Lichtdämpfung kleiner ist als 3 dB, der wenigstens 4 Lichtsignale mit nahe beieinanderliegenden Wellenlängen voneinander trennen kann, wobei eine Übersprechdämpfung zwischen den Einzelsignalen von mehr als 25 dB erreicht wird.

Ein Ausführungsbeispiel der Erfindung ist in der Ziechnung dargestellt und wird im folgenden näher beschrieben. Es zeigen:

Fig. 1 einen Demultiplexer mit 4 Ausgängen in schematischer Darstellung

Fig. 2 die Anordnung der Endflächen der Lichtwellenleiter vor der Kugellinse.

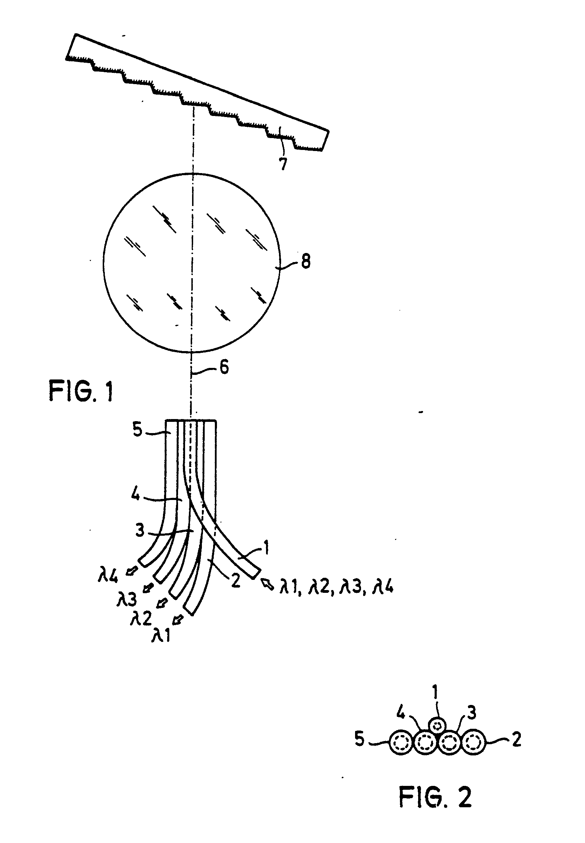

Als bekannt werden vorausgesetzt die Funktion eines Lichtwellenleiters und sein Aufbau aus Mantel und Kern. Der Aufbau ist daher in Fig. 2 lediglich angedeutet, aber nicht mit zusätzlichen Bezugszeichen erklärt.

In Fig. 1 ist der Aufbau eines Demultiplexers und die Anordnung seiner Teile schematisch dargestellt. Der Lichtwellenleiter 1 führt im Beispiel vier verschiedene Lichtsignale mit den Wellenlängen $\lambda_1$, $\lambda_2$, $\lambda_3$ und $\lambda_4$. Seine Endfläche liegt vor der Kugellinse 8. Dans entlang der optischen Achse 6 austretende Licht wird durch die Kugellinse 8 auf das Beugungsgitter 7 projeziert. Es ist um etwa 20° gegen die optische Achse 6 geneigt und enthält ein Linienmuster von beispielsweise 800 Linien pro mm. Das Beugungsgitter ist mit einer dünnen reflektierenden Schicht bedeckt, die beispielsweise durch Aufdampfen von Aluminium oder Silber hergestellt sein kann. Bei der Reflektion am Beugungsgitter erfährt das auftreffende Licht eine bestimmte Ablenkung, die abhängig ist von der Wellenlänge des auftreffenden Lichtes. Die verschiedenen Lichtsignale mit verschiedenen Wellenlängen werder hier also räumlich getrennt und durch die Kugellinse 8 auf die Endflächen der Lichtwellenleiter 2, 3, 4 und 5 projeziert, so daß sie in diesen Lichtwellenleitern zu getrennten Lichtdetektoren bzw. zur sonstigen Weiterverarbeitung geleitet werden können. Die Anordnung der Endflächen der Lichtwellenleiter 1 bis 5 ist in Fig. 2 gesondert dargestellt. Es ist erkennbar, daß die Endflächen der die getrennten Signale aufnehmenden Lichtwellenleiter 2, 3, 4 und 5 in einer Reihe derart angeordnet sind, daß sie fast unmittelbar aneinandergrenzen. Unmittelbar neben dieser Reihe ist die Endfläche des die gemischten Signale zuführenden Lichtwellenleiters 1 angeordnet. Auf die Fixierung der einzelnen Bauteile zueinander braucht hier nicht näher eingegangen zu werden, sie erfolgt vorwiegend durch Einbettung in geeigneten Kunststoff.

**Patentanspruch**

Vorrichtung zum Auskoppeln von optischen Signalen verschiedener Wellenlängen ($\lambda_1$, $\lambda_2$, $\lambda_3$, $\lambda_4$) aus einem Lichtwellenleiter (1) in mehrere getrennte Lichtwellenleiter (2, 3, 4, 5) mit einem reflektierenden Beugungsgitter (7), welches gegen die optische Achse des Strahlenganges (6) geneigt ist, und mit einer zwischen den Enden der Lichtwellenleiter (1, 2, 3, 4, 5) und dem Beugungsgitter (7) angeordneten Linse, wobei die Endflächen der die Einzelsignale aufnehmenden Lichtwellenleiter (2, 3, 4, 5) nahezu unmittelbar aneinandergrenzend in einer Reihe angeordnet und fixiert sind, dadurch gekennzeichnet, daß die linse eine Kugellinse (8) ist und daß die Endfläche des die Signale zuführenden Lichtwellenleiters (1) unmittelbar neben der Reihe der Endflächen der anderen Lichtwellenleiter (2, 3, 4, 5) angeordnet ist.

**Revendication**

Dispositif pour introduire des signaux optiques de longueurs d'onde différentes ($\lambda_1$, $\lambda_2$, $\lambda_3$, $\lambda_4$) issus d'un guide d'ondes lumineuses (1) dans plusieurs guides d'ondes lumineuses séparés (2, 3, 4, 5) au moyen d'un réseau de diffraction réfléchissant (7), incliné par rapport à l'axe optique du trajet de faisceau (6), et d'une lentille disposée entre les extrémités des guides d'ondes lumineuses (1, 2, 3, 4, 5) d'une part et le réseau de diffraction (7) d'autre part, les surfaces terminales des guides d'ondes lumineuses (2, 3, 4, 5) recevant les signaux distincts étant disposées et fixées dans une rangée de façon à être à peu près immédiatement contiguës, caractérisé en ce que la lentille est une lentille sphérique (3) et en ce que la surface terminale du guide d'ondes lumineuses (1) émettant les signaux est disposée immédiatement à côté de la rangée des surfaces terminales des autres guides d'ondes lumineuses (2, 3, 4, 5).

**Claim**

A device for coupling optical signals of different wavelength ($\lambda_1$, $\lambda_2$, $\lambda_3$, $\lambda_4$) from an optical fibre (1) into a plurality of separate optical fibres (2, 3, 4, 5), comprising a reflective diffraction grating (7) which is inclined with respect to the optical axis of the beam path (6) and also comprising a lens which is arranged between the ends of the optical fibres (1, 2, 3, 4, 5) and the diffraction grating (7), the end faces of the optical fibres (2, 3, 4, 5) receiving the separate signals being arranged and secured substantially directly adjacently in a row, characterized in that the lens is a spherical lens (3), the end face of the optical fibre (1) supplying the signals being arranged directly adjacent the row of end faces of the other optical fibres (2, 3, 4, 5).

0  073  300

FIG. 1

FIG. 2

1